# EUROPÄISCHE PATENTSCHRIFT

(11) **EP 2 449 406 B1**
(45) Veröffentlichungstag und Bekanntmachung des Hinweises auf die Patenterteilung: **18.12.2013**
(21) Anmeldenummer: 10715877.6
(22) Anmeldetag: 03.05.2010
(51) Int. Cl.: G01S 7/03, H01Q 1/32, H01Q 19/06

(54) **RADARSENSOR FÜR KRAFTFAHRZEUGE**
RADAR SENSOR FOR MOTOR VEHICLES
DÉTECTEUR DE RADAR POUR VÉHICULES À MOTEUR

(30) Priorität: 02.07.2009 DE 102009027433
(43) Veröffentlichungstag der Anmeldung: 09.05.2012
(73) Patentinhaber: Robert Bosch GmbH, 70442 Stuttgart (DE)
(72) Erfinder: BINZER, Thomas, 70565 Stuttgart (DE); HANSEN, Thomas, 31139 Hildesheim (DE)
(86) Internationale Anmeldenummer: PCT/EP2010/055967
(87) Internationale Veröffentlichungsnummer: WO 2011/000607

(56) Entgegenhaltungen:
- DE-A1-102007 036 262
- GB-A- 2 044 006
- US-A- 5 264 859

## Beschreibung

### Stand der Technik

Die Erfindung betrifft einen Radarsensor für Kraftfahrzeuge, mit einer Quelle für Radarstrahlung und einer vor der Quelle angeordneten Linse aus einem für die Radarstrahlung brechenden Material, die mindestens auf einer Seite eine konvexe Oberfläche hat, die in der Elevation eine stärkere Krümmung hat als im Azimut, wobei sich die konvexe Oberfläche der Linse auf der von der Quelle abgewandten Seite befindet und die Linse auf der der Quelle zugewandten Seite eine konkave Zylinderlinse bildet.

In Kraftfahrzeugen werden Radarsensoren im Zusammenhang mit Fahrerassistenzsystemen, beispielsweise Abstandswarn- und Regelsystemen, zur Ortung von Objekten, insbesondere von anderen Fahrzeugen, im Umfeld des eigenen Fahrzeugs eingesetzt. Gebräuchlich sind beispielsweise langreichweitige Radarsensoren (LRR), die mit einer Frequenz von etwa 77 GHz arbeiten, sowie kurzreichweitige Radarsensoren (SRR) mit einer Frequenz von 24 GHz. Wenn der Radarsensor vorn im Fahrzeug eingebaut ist und dazu dient, den Abstand zu vorausfahrenden Fahrzeugen zu messen, so hat die Linse den Zweck, die emittierte und/oder empfangene Radarstrahlung so zu mindestens einer nach vorn gerichteten Radarkeule zu bündeln, daß die maximale Intensität und Empfindlichkeit in dem Winkelbereich erreicht wird, indem sich vorausfahrendes Fahrzeuge normalerweise befinden, während weiter von der Fahrbahn entfernt liegende Objekte möglichst kein öder nur ein geringes Radarecho hervorrufen. Bei einem winkelauflösenden Radarsensor werden mehrere im Azimut aufgefächerte Radarkeulen erzeugt, so daß sich aus den Amplituden- und Phasenverhältnissen zwischen den aus den verschiedenen Keulen erhaltenen Signalen auf den Azimutwinkel des georteten Objekts schließen läßt.

Bei einer gebräuchlichen Bauform von Radarsensoren für Kraftfahrzeuge wird eine sphärische Linse oder, allgemeiner, eine Linse in der Form eines Rotationskörpers benutzt, die aus einem Kunststoff mit einem für die jeweilige Frequenz der Radarstrahlung hohen Brechungsindex besteht und die Strahlung wie eine Sammellinse bündelt. Dabei wird im Azimut (in der Horizontalen) und in der Elevation (in der Vertikalen) im Wesentlichen die gleiche Richtcharakteristik erreicht. Allenfalls kann es bei winkelauflösenden Radarsensoren, die mehrere nebeneinander in der Brennebene der Linse angeordneten Antennenelemente aufweisen, durch Interferenz zwischen diesen Antennenelementen zu einer gewissen Modifikation der Richtcharakteristik im Azimut kommen.

Häufig wäre es jedoch insbesondere bei langreichweitigen Radarsensoren erwünscht, die Strahlung in der Elevation stärker zu bündeln als im Azimut, so daß einerseits im Azimut ein ausreichend breites Gesichtsfeld erreicht wird, andererseits jedoch durch stärkere Bündelung in der Elevation unnötige Energieverluste vermieden werden und zugleich Störsignale durch Reflexion von der Fahrbahnoberfläche (Bodenclutter) oder dergleichen besser unterdrückt werden. Ein möglicher Weg, eine solche anisotrope, d. h. in der Elevation und im Azimut unterschiedliche Richtcharakteristik zu erreichen, besteht darin, komplizierte Linsensysteme mit mehreren Linsen zu verwenden. Bei Radarsensoren für Kraftfahrzeuge ist dies jedoch aus Kostengründen und aufgrund des hohen Platzbedarfes für die Linsensysteme nicht praktikabel.

Aus US 5 264 859 A und GB 2 044 006 A sind Radarsensoren nach dem Oberbegriff des Anspruchs 1 bekannt.

Aus DE 10 2007 036 262 ist ein Radarsensor bekannt, dessen Linse aus zwei Rücken an Rücken angeordneten plankonvexen Zylindedinsen zusammengesetzt ist, deren Zylinderachsen rechtwinklig zueinander verlaufen und die unterschiedliche Brennweiten haben.

### Offenbarung der Erfindung

Aufgabe der Erfindung ist es, einen Radarsensor zu schaffen, der eine kompakte Linse und eine verbesserte Antennencharakteristik in Elevation und Azimut aufweist.

Diese Aufgabe wird dadurch gelöst, daß die Linse auf der Quelle zugewandten Seite durch eine ebene Fläche begrenzt ist, die durch die konkave Zylinderlinse unterbrochen ist, und daß die Achse der Zylinderlinse vertikal verläuft.

Da bei dem erfindungsgemäßen Radarsensor das Brechungsverhalten im Azimut und in der Elevation durch ein und dieselbe konvexe Oberfläche der Linse bestimmt wird, kann die Linse als plankonvexe Linse Linse ausgebildet werden, wodurch sich eine kompakte Bauweise der Linse und damit des gesamten Radarsensors ergibt. Die Linse läßt sich dabei so gestatten, daß sie im Azimut und in der Elevation eine ähnlich große Apertur aufweist, was dazu beiträgt, unerwünschte Nebenkeulen im Antennendiagramm zu unterdrücken.

Dadurch daß die Linse auf der der konvexen Oberfläche gegenüberliegenden und damit der Strahlungsquelle zugewandten Seite eine konkave Zylinderlinsenstruktur auf, deren Zylinderachse vertikal verläuft, läßt sich erreichen, daß die Linse, deren konvexe Oberfläche insgesamt relativ stark gekrümmt sein muß, damit die nötige Strahlbündelung in der Elevation erreicht wird, im Azimut gleichwohl nur eine relativ schwache oder gar keine Bündelung der Radarstrahlung bewirkt, so daß ein entsprechend großer Winkelbereich überstrichen werden kann.

Vorteilhafte Ausgestaltungen und Weiterbildungen der Erfindung sind in den Unteransprüchen angegeben.

Die konkav zylindrisch gekrümmte Oberfläche kann im horizontalen Schnitt die Form einer Kreislinie oder wahlweise auch einer Ellipse oder einer Hyperbel haben.

Die konvexe Oberfläche der Linse hat vorzugsweise sowohl in der Elevation wie auch im Azimut die Form eines Kegelschnitts, beispielsweise eine elliptische Form. In der Elevation ist die Linse vorzugsweise als aplanatische Linse ausgebildet,

Im Folgenden wird ein Ausführungsbeispiel anhand der Zeichnung näher erläutert.

Es zeigen:
- Figur 1: eine perspektivische Darstellung einer Linse eines Radarsensors in einer Ansicht schräg von vorn;
- Figur 2: eine perspektivische Darstellung der Linse nach Fig. 1 in einer Ansicht schräg von hinten;
- Figur 3: einen horizontalen Schnitt durch die Linse nach Fig. 1;
- Figur 4: einen vertikalen Schnitt durch die Linse nach Fig. 1;
- Figur 5: ein Azimut-Antennendiagramm für einen Radarsensor mit einer Linse nach Fig. 1 bis 4; und
- Figur 6: ein Elevations-Antennendiagramm des Radarsensors.

### Ausführungsformen der Erfindung

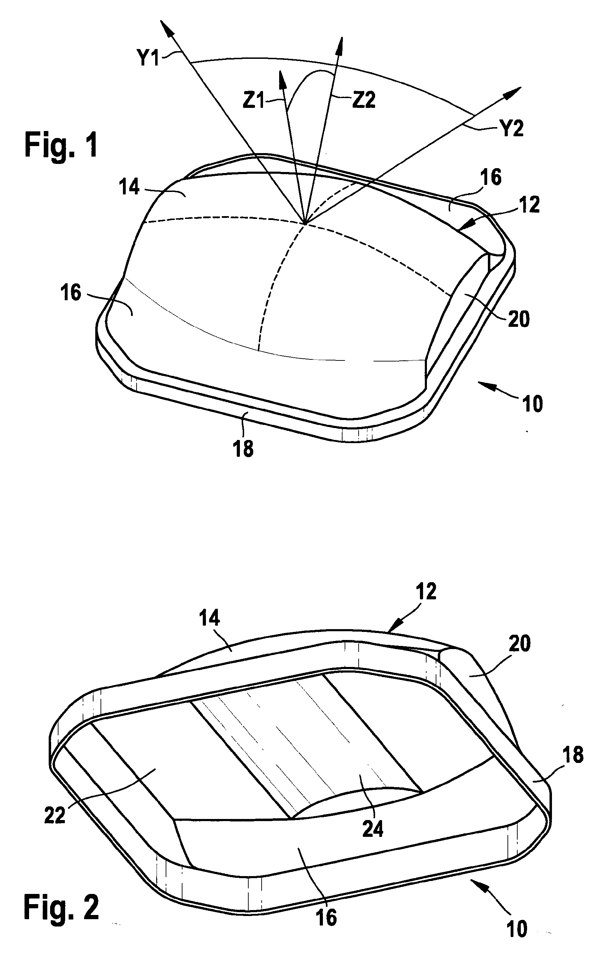

In Fig. 1 ist von einem Radarsensor für Kraftfahrzeuge nur eine vordere Abdeckkappe 10 gezeigt, die beispielsweise im Spritzgießverfahren aus einem für Mikrowellen brechenden Kunststoff herstellt ist und in die eine Linse 12 integriert ist. Die Abdeckkappe 10 schließt ein nicht gezeigtes Gehäuse ab, das die übrigen Komponenten des Radarsensors aufnimmt, insbesondere eine Antennenanordnung und eine zugehörige Elektronik, die eine Quelle zum Senden von Radarstrahlung sowie eine Empfangseinrichtung zum Empfang der reflektierten Radarsignale bilden. In Fig 1 blickt man auf die von der Quelle abgewandte Vorderseite der Linse 12. An dieser Vorderseite weist die Linse eine konvexe Oberfläche 14 auf, die in unterschiedlichen Richtungen unterschiedlich stark gekrümmt ist.

Durch Pfeile Y1 und Y2 wird in Fig. 1 eine azimutale Ebene symbolisiert, d.h., eine Ebene die horizontal durch die optische Achse der Linse 12 verläuft. In dieser Ebene ist die Krümmung der konvexen Oberfläche 14 minimal. In der dazu rechtwinkligen Elevationsebene, die in Fig. 1 durch Pfeile Z1 und Z2 aufgespannt wird, ist die Krümmung der konvexen Oberfläche 14 hingegen maximal. Dementsprechend hat die Linse 12 in vertikaler Richtung (in Richtung der Elevation) eine geringere Breite als in horizontaler Richtung. Der konvexe Linsenkörper hat deshalb eine längliche Gestalt und ist an seinen Längsseiten durch Sockelflächen 16 mit einem umlaufenden Rand 18 der Abdeckkappe 10 verbunden. An seinen oberen und unteren Enden (den linken und rechten Enden in Fig. 1) ist der Linsenkörper dagegen in Höhe des Randes 18 stumpf abgeschnitten, so daß er hier durch Stirnflächen 20 begrenzt wird.

Fig. 2 zeigt einen Blick auf die Innenseite der Abdeckkappe 10. Man erkennt hier, daß der aus massivem Kunststoff bestehende Körper der Linse 12 auf der Innenseite der Abdeckkappe, also der der Quelle zugewandten Seite, durch eine ebene Fläche 22 begrenzt ist, die allerdings durch eine konkave Zylinderlinse 24 unterbrochen ist. Die Zylinderachse der Zylinderlinse 24 verläuft vertikal, also in Elevationsrichtung.

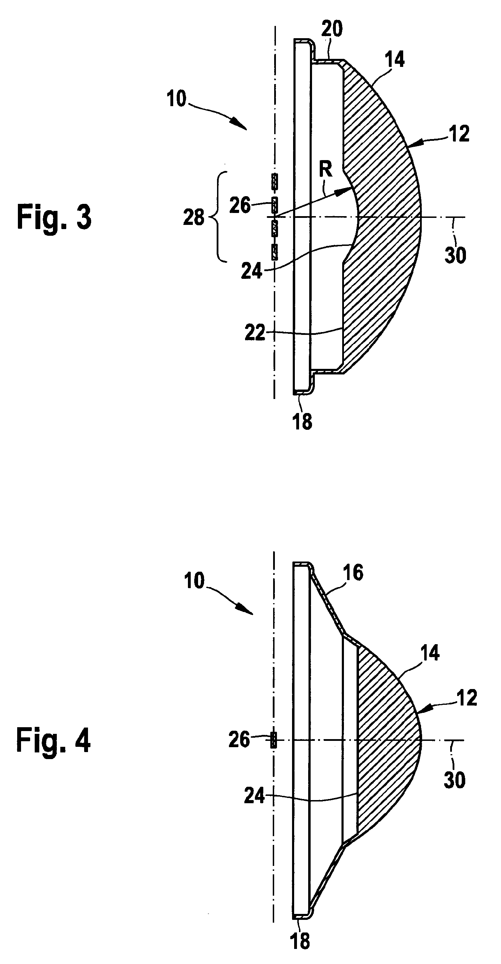

In Fig. 3 ist der Querschnitt der konkaven Zylinderlinse 24 zu erkennen. Die konkav gekrümmte Fläche hat in diesem Beispiel im Schnitt die Form eines Segments eines Kreises mit dem Radius R.

Die konvexe Oberfläche 14 hat in dieser Schnittdarstellung eine elliptische Form. Schematisch sind in Fig. 3 vier Antennenpatches 26 eingezeichnet, die zusammen mit einer nicht gezeigten Hochfrequenzelektronik eine Quelle 28 für Radarstrahlung bilden und zugleich zum Empfang der reflektierten Radarsignale dienen. Die Antennenpatches 26 liegen im gezeigten Beispiel etwa im Zentrum des Kreises mit dem Radius R, der die Zylinderlinse 24 definiert, sind jedoch in horizontaler Richtung gegeneinander versetzt und symmetrisch zur optischen Achse 30 der Linse 12 angeordnet. Durch die vier Antennenpatches 26 werden somit vier Sende- und Empfangskeulen gebildet, die im Azimut gegeneinander versetzt sind. Die Auswertung der von den verschiedenen Patches empfangenen Signale erlaubt es daher, den Azimutwinkel der georteten Objekte zumindest grob zu bestimmen.

Der Abstand der Ebene, in der die Antennenpatches 26 liegen, zur Linse 12 ist so gewählt, daß der kombinierte Effekt der Zylinderlinse 24 und der im Azimut nur schwach gekrümmten konvexen Oberfläche 14 der Linse nur eine schwache Bündelung der Radarstrahlung ergibt, so daß die Strahlung aller vier Antennenpatches in einen relativ weiten Winkelbereich beiderseits der optischen Achse 30 abgestrahlt wird.

Fig. 4 zeigt einen Schnitt durch die Linse 12 in der Vertikalen, also in der Elevationsebene, in der die konvexe Oberfläche 14 zwar ebenfalls eine elliptische Gestalt hat aber deutlich stärker gekrümmt ist. Die Zylinderlinse 24 erscheint in dieser Richtung als plan. In der Elevation wirkt die Linse 12 als aplanatische Linse, die die divergent von den Antennenpatches 26 ausgehende Strahlung so bündelt, daß ein nahezu paralleles Strahlenbündel emittiert wird.

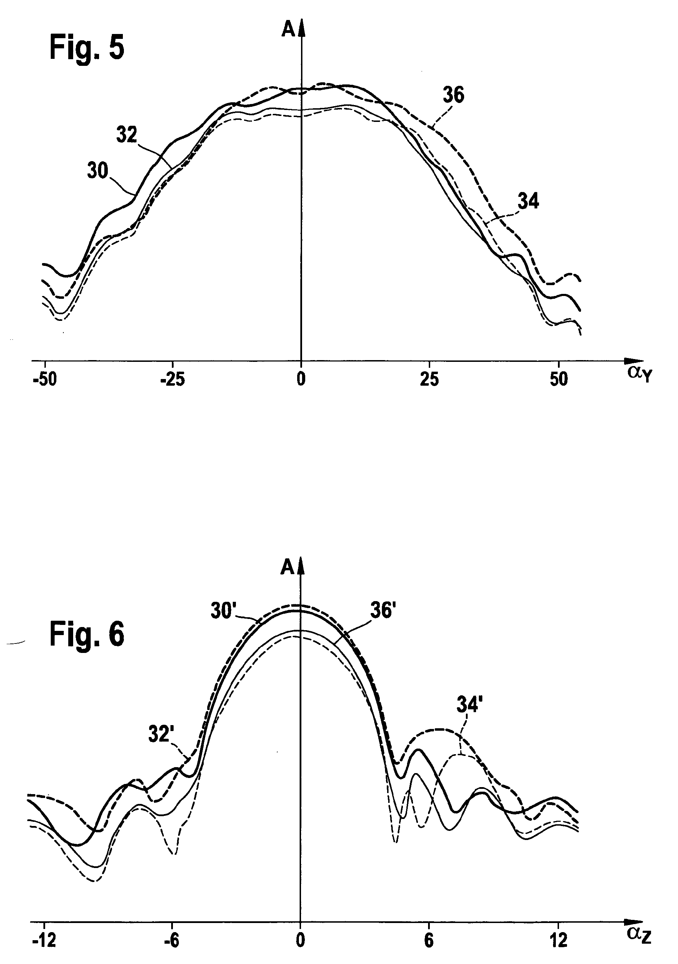

In Fig. 5 und 6 sind die Antennendiagramme im Azimut und in der Elevation dargestellt, die sich aus der in Fig. 1 bis 4 gezeigten Linsengeometrie ergeben.

Die Kurven 30, 32, 34 und 36 in Fig. 5 geben für jedes der Antennenpatches 26 die Amplitude A des zugehörigen Signals als Funktion des Azimutwinkels α_{Y} an, unter dem das Signal emittiert wird. Man erkennt, daß jedes Antennenpatch eine breite Hauptkeule bildet, die sich über einen Winkelbereich von etwa ± 50° erstreckt und nur von sehr schwach ausgebildeten Nebenkeulen begleitet ist. Die Kurven sind entsprechend dem Versatz der Antennenpatches 26 im Azimut etwas gegeneinander versetzt, weisen jedoch in dem gesamten Winkelbereich eine hohe Überlappung auf, was die Auswertung der Signale und die Bestimmung der Azimutwinkel der georteten Objekte erleichtert.

In Fig. 6 geben die Kurven 30', 32', 34' und 36' die Amplituden A der von den einzelnen Antennenpatches 26 gesendeten Signale in Abhängigkeit vom Elevationswinkel α_{Z} an. Hier zeigt sich, daß die Bündelungswirkung der in der Elevation stark gekrümmten konvexen Oberfläche 14 zu einer schmalen Hauptkeule führt, die sich nur über einen Winkelbereich von etwa ±6° erstreckt. Auch in der Elevation sind die Hauptkeulen nur von relativ schwachen Nebenkeulen begleitet.

Da die Antennenpatches 26 auch zum Empfang der reflektierten Radarsignale dienen, können die Antennendiagramme in Fig. 5 und 6 auch als Diagramme für die Empfindlichkeit der Empfangsantennen interpretiert werden. Die starke Bündelung in der Elevation (Fig. 6) stellt sicher, daß Störsignale wie Bodenclutter und dergleichen wirksam unterdrückt werden.

## Patentansprüche

1. Radarsensor für Kraftfahrzeuge, mit einer Quelle (28) für Radarstrahlung und einer vor der Quelle angeordneten Linse (12) aus einem für die Radarstrahlung brechenden Material, die mindestens auf einer Seite eine konvexe Oberfläche (14) hat, die in der Elevation (Z1, Z2) eine stärkete Krümmung hat als im Azimut (Y1, Y2), wobei sich die konvexe Oberfläche (14) der Linse auf der von der Quelle (28) abgewandten Seite befindet und die Linse (12) auf der der Quelle (28) zugewandten Seite eine konkave Zylinderlinse (24) bildet, **dadurch gekennzeichnet, daß** die Linse (12) auf der der Quelle zugewandten Seite durch eine ebene Fläche (22) begrenzt ist, die durch die konkave Zylinderlinse (24) unterbrochen ist, und daß die Achse der Zylinderlinse (24) vertikal verläuft.

2. Radarsensor nach Anspruch 1, bei dem die konkav gekrümmte Fläche der Zylinderlinse (24) im Schnitt die Form eines Kegelschnittes hat.

3. Radarsensor nach Anspruch 2, bei dem die konkav gekrümmte Fläche der Zylinderlinse (24) im Schnitt die Form eines Kreissegments hat.

4. Radarsensor nach einem der vorstehenden Ansprüche, bei dem die konvexe Oberfläche (14) der Linse (12) im Schnitt in der azimutalen Ebene und der Elevationsebene jeweils die Form eines Kegelschnittes hat.

5. Radarsensor nach Anspruch 4, bei dem die konvexe Oberfläche (14) im Schnitt in der azimutalen Ebene und der Elevationsebene jeweils die Form eines Ellipsensegments hat.

6. Radarsensor nach einem der vorstehenden Ansprüche, bei dem die Linse (12) in der Elevation als aplanatische Linse konfiguriert ist.

## Claims

1. Radar sensor for motor vehicles, having a source (28) for radar radiation and a lens (12) arranged upstream of the source and made of a material that is refractive for the radar radiation, which lens has at least on one side a convex surface (14) which has a stronger curvature in elevation (Z1, Z2) than in azimuth (Y1, Y2), wherein the convex surface (14) of the lens is located on the side that is remote from the source (28) and the lens (12) forms a concave cylindrical lens (24) on the side facing the source (28), **characterized in that** the lens (12) on the side facing the source is delimited by a planar surface (22), which is interrupted by the concave cylindrical lens (24), and **in that** the axis of the cylindrical lens (24) is vertical.

2. Radar sensor according to Claim 1, in which the concavely curved surface of the cylindrical lens (24) has, in section, the shape of a conic section.

3. Radar sensor according to Claim 2, in which the concavely curved surface of the cylindrical lens (24) has, in section, the shape of a segment of a circle.

4. Radar sensor according to one of the preceding claims, in which the convex surface (14) of the lens (12) in the azimuthal plane and the elevation plane in each case has, in section, the shape of a conic section.

5. Radar sensor according to Claim 4, in which the convex surface (14) in the azimuthal plane and the elevation plane in each case has, in section, the shape of a segment of an ellipse.

6. Radar sensor according to one of the preceding claims, in which the lens (12) in elevation is configured as an aplanatic lens.

## Revendications

1. Capteur radar pour véhicules automobiles, comprenant une source (28) de rayonnement radar et une lentille (12) disposée devant la source, fabriquée en un matériau réfringent pour le rayonnement radar, laquelle lentille présente une surface convexe (14) au moins d'un côté, qui présente une courbure en élévation (Z1, Z2) plus forte qu'en direction azimutale (Y1, Y2), la surface convexe (14) de la lentille se trouvant du côté opposé à la source (28) et la lentille (12) formant, du côté tourné vers la source (28), une lentille cylindrique concave (24), **caractérisé en ce que** la lentille (12) est limitée, du côté tourné vers la source, par une surface plane (22) qui est interrompue par la lentille cylindrique concave (24), et **en ce que** l'axe de la lentille cylindrique (24) s'étend verticalement.

2. Capteur radar selon la revendication 1, dans lequel la surface de courbure concave de la lentille cylindrique (24) présente, en coupe, la forme d'une section conique.

3. Capteur radar selon la revendication 2, dans lequel la surface de courbure concave de la lentille cylindrique (24) présente en coupe la forme d'un segment de cercle.

4. Capteur radar selon l'une quelconque des revendications précédentes, dans lequel la surface convexe (14) de la lentille (12) présente en coupe dans le plan azimutal et dans le plan d'élévation à chaque fois la forme d'une section conique.

5. Capteur radar selon la revendication 4, dans lequel la surface convexe (14) présente en coupe dans le plan azimutal et dans le plan d'élévation à chaque fois la forme d'un segment d'ellipse.

6. Capteur radar selon l'une quelconque des revendications précédentes, dans lequel la lentille (12) est configurée en élévation sous forme de lentille aplanatique.
